# EUROPEAN PATENT APPLICATION

(11) **EP 2 357 105 A1**
(43) Date of publication of application: **17.08.2011**
(21) Application number: 10173763.3
(22) Date of filing: 23.08.2010
(51) Int. Cl.: B60K 6/30, B60K 6/46, B60K 25/00, B60W 10/04, B60W 10/18, B60W 10/24, F03G 7/10

(54) **Electric power generation system of electric vehicle**

(30) Priority: 20.01.2010 KR 20100005309
(71) Applicant: Shin Nam Soo, Daejeon (KR)
(72) Inventor: Shin Nam Soo, Daejeon (KR)
(74) Representative: Lang, Christian

(57) **Abstract**

A power generation control system of an electric vehicle is disclosed. The power generation control system of an electric vehicle is characterized in that an elastic recovery force of a spring is converted into a rotational energy via a spring power generation apparatus (1000), and the output of converted rotational energy is geared up for driving a vehicle generator (600) and generating electric energy, and when the spring is unwound, the auto winding operation of the spring is performed by means of a spring winding motor (900) with the help of control of a control unit (4000), and when a battery (700) is over charged by means of the power generation process, the operation of the spring power generation apparatus is stopped.

## Description

### Technical Field

The present invention relates to an electric power generation system of an electric vehicle, and in particular to an electric power generation system of an electric in which an elastic recovery force of a spring is converted into a rotational energy by using a spring power generation apparatus, and a generator is driven by accelerating the converted rotational energy for thereby producing electric energy, and when a spring is over loosened by a control operation of a controller, an automatic winding operation of a spring is performed by means of a spring winding motor, and when a battery is over charged by means of a power generation operation, the operation of a spring power generation apparatus is stopped.

### Background Art

The electric vehicle which stores electric energy into a battery or the like and uses the same as a driving source is environment friendly, but has a problem that a long distance driving is impossible as compared to a combustion engine vehicle which uses a fossil fuel such as gasoline as a driving source because an internal combustion engine vehicle can run by a simple fuel supply, so it is proper to a long distance driving, but the electric vehicle does not by means of a current technology level.

So far, the electric engine is generally used for a relatively shorter distance operation and is very limitedly used to an environment friendly place such as a golf field.

### Disclosure of Invention

Accordingly, it is an object of the present invention to provide a power generation control system for an electric vehicle which can provide a relatively longer time self-power generation capacity.

It is another object of the present invention to provide a power generation control system for an electric vehicle in which a manual winding operation of a spring can be performed by using an external force, and an automatic winding operation of a spring can be performed by using a controller and a detection sensor and a spring winding motor, and an over charging operation of a battery can be prevented.

It is further another object of the present invention to provide a power generation control system for an electric vehicle in which when a manual or automatic winding operation of a spring is adapted, it is possible to minimize the use of driving force which is used for the operation.

To achieve the above object of the present invention, there is provided a power generation control system of an electric vehicle which comprises a spring power generation apparatus 1000 which converts an elastic recovery force of a spring 1 into a rotational energy, and the revolution of the rotational energy is accelerated, and the accelerated rotational energy is applied to a vehicle generator 600 for thereby generating electric power via the vehicle generator 600; a battery 700 which stores an electric energy generated by the vehicle generator 600; an overcharge detection unit 2000 which detects an overcharge of the battery 700; a detection sensor 800 which detects an over leasing state of the spring 1; a spring winding motor 900 which provides a driving force to a main driving shaft S1 cooperating with the spring 1; a braking unit 30000 which restricts the main driving shaft S1; and a control unit 4000 which provides a power to the spring winding motor 900 for a certain time period when the detection sensor 800 detects an over loosened state of the spring 1 and finishes a winding operation of the spring 1, and when the overcharge detection unit 2000 detects an overcharge state of the battery 700, the winding operation of the spring starts or is finished, and the braking unit 3000 starts operation, so that the power generation operation of the spring power generation apparatus 1000 stops, and when the battery 700 is released from the overcharge state via the overcharge detection unit 2000, the control unit controls the braking unit 3000 to be released from the operation.

The spring power generation apparatus 1000 includes a first driving force accelerating unit 200 which is disposed between the main driving shaft S1 and the vehicle generator 600 and receives a driving force from the main driving shaft S1 and accelerates the inputted driving force and outputs the same; a second driving force accelerating unit 300 which receives a driving force from the first driving force accelerating unit 200 and accelerates the inputted driving force and outputs the same; and a third driving force accelerating unit 400 which receives a driving force from the second driving force accelerating unit 300 and accelerates the inputted driving force and outputs the same to the vehicle generator 600 for thereby operating the vehicle generator 600.

There is further provided a driving force decelerating unit 100 which is disposed between the main driving shaft S1 and the spring winding motor 900 and receives a driving force from the spring winding motor 900 and decelerates the inputted driving force and outputs to the main driving shaft S1, so that the main driving shaft S1 rotates in the opposite direction.

According to the power generation control system of an electric vehicle according to the present invention, there is further provided a manual handle 2 which is connected with the main driving shaft S1 so that an external force is applied to the main driving shaft S1, and when the external force is applied, the main driving shaft S1 rotates in the opposite direction.

There is further provided a fourth driving force accelerating unit 500 which is disposed between the main driving shaft S1 and the manual handle 2 for accelerating an external force inputted from the manual handle 2 and outputting to the main driving shaft S1.

At least one selected from the driving force decelerating unit, the first driving force accelerating unit, the second driving force accelerating unit, the third driving force accelerating unit and the fourth driving force accelerating unit comprises first and second driving modules 10 and 20 in which the centers of a solar gear 12 and a pinion 22 are integrally connected at an end of each of the first and second driving shafts 11 and 21, and which have a through hole 50 which passes through the centers of the solar gear 12 and the pinion 22 at the ends of the first and second driving shafts 11 and 21; a accelerator and decelerator unit 60 which has the same number of teeth as the solar gear 12 and the pinion 22 and is thread engaged with the solar gears and pinion 22, with its center being axially engaged at the support shaft 61; and a support body 70 through which the first and second driving shafts 11 and 21 rotatably pass through and by which the support shaft 61 is rotatably supported. So, the first and second driving shafts can freely rotate with respect to the main driving shaft or the shaft, and when the main driving shaft or shaft rotates in a certain direction, the first and second driving shafts rotate at different speeds, and the first and second driving shafts can rotate in the direction opposite to the driving direction of the main driving shaft or the shaft. There is further provided a latch groove 83 which has a sliding bent portion 81 obliquely inwardly bent from an outer diameter portion in the main driving shaft S1 along its outer surface and an engaging portion 82 which is vertically and outwardly bent from an end of the sliding bent portion 81; and the driving force decelerating unit 100 is axially disposed at an outer diameter portion of the second driving shaft 21 of the driving force decelerating unit 100 and includes a support frame 91 which rotates together with the second driving shaft 21 of the driving force decelerating unit 100, and a latch casing 94 includes a latch unit 92 on the upper side of the support frame 91 and a spring 93 for elastically and downwardly supporting the latch unit 92; and the latch unit 92 further includes a latch module 90 having the same or similar shape with the latch groove 83 as being formed in a protruded shape, and a latch move hole 7 is formed at the second driving shaft 21 of the driving force decelerating unit 100, with the portions, which correspond to the latch unit 92 and the latch groove 83, passing through the latch move hole 7.

It is preferred that one-way bearing is engaged at an outer diameter portion of the first driving shaft of the driving force decelerating unit and does not rotate in the opposite direction of the main driving shaft, and the pulley rotating together with the one-way bearing is engaged at an outer diameter portion of the one-way bearing and is connected with the pulley engaged at the first driving shaft of the fourth driving force accelerating unit via the driving force transfer belt, and a manual handle is engaged at the second driving shaft of the fourth driving force accelerating unit.

It is further preferred that one-way bearing is engaged at an outer diameter portion of the first driving shaft of the driving force decelerating unit and does not rotate in the opposite direction of the main driving shaft, and the pulley rotating together with the one-way bearing is engaged at an outer diameter portion of the one-way bearing and is connected with the pulley engaged at the driving shaft of the spring winding motor via the driving force transfer belt.

In addition, the pulley P2 engaged to an outer diameter side of the second driving shaft 21 of the first driving force accelerating unit 200 is connected with the pulley P1 engaged at the main driving shaft S1 via the driving force transfer belt V1, and the pulley P3 engaged to an outer diameter side of the first driving shaft 11 of the first driving force accelerating unit 200 is connected with the pulley P4 engaged at the second driving shaft 21 of the second driving force accelerating unit 300 via the driving force transfer belt V2, and the pulley P6 engaged to an outer diameter portion of the second driving shaft 21 of the third driving force accelerating unit 400 is connected with a pulley P5 engaged to an outer diameter side of the first driving shaft 11 of the second driving force accelerating unit 300 via the driving force transfer belt V3, and the pulley P7 engaged to an outer diameter side of the first driving shaft 11 of the third driving force accelerating unit 400 is connected with the pulley P8 engaged to the driving shaft of the vehicle generator 600 via the driving force transfer belt V4, respectively, in an inter driving structure.

Preferably, one-way bearing 3c is inserted into an outer diameter portion of the main driving shaft S1 between the main driving shaft S1 and the pulley P1 and rotates in one direction of the main driving shaft S1, not rotating in the opposite direction, and the pulley P1 is engaged to an outer diameter portion of the main driving shaft S1, so it is configured in the same rotation construction as the one-way bearing 3c.

Preferably, a contact point of the detection sensor 800 is formed opposite to the outer most side surface 1a of the plate spring belonging to the spring 1 at a certain distance, and the contact point 810 is pressed by means of the plate spring when the spring 1 is over loosened for thereby performing a contact point operation.

More preferably, the driving shaft S1 is equipped with the braking disk 3100, and the braking unit 3000 is a disk braking unit for pressing the braking disk 3100.

### Effects of the invention

According to the present invention, a self-power generation can be obtained for a relatively longer time, and a desired effect can be obtained.

In the present invention, a manual winding operation of a spring can be obtained by using an external force, and an automatic winding operation of a spring can be obtained by using a controller and a detection sensor and a spring winding motor. When an external force is inputted once, a power generation operation can be continuously performed for a relatively longer time.

When a manual or automatic winding operation of a spring is obtained, it is possible to minimize the use of driving force which is used for the same.

Other features of the present invention will be embodied with the help of the following detailed descriptions.

### Brief Description of the Drawings

The present invention will become better understood with reference to the accompanying drawings which are given only by way of illustration and thus are not limitative of the present invention, wherein;
Figure 1 is a schematic view of a power generation control system of an electric vehicle according to the present invention;
Figure 2 is a flow chart of a control of a power generation control system of an electric vehicle according to the present invention;
Figure 3 is a schematic view of a spring power generation apparatus of Figure 1;
Figure 4 is a disassembled perspective view illustrating a driving force deceleration unit 100 of a major portion I of Figure 3;
Figure 5 is a cross sectional view of line A-A' of Figure 3 from which an element of the construction of Figure 4 is omitted;
Figure 6 is a cross sectional view of line B-B' of Figure 5;
Figure 7 is a cross sectional view of A-A' which shows an engaged state of Figure 4;
Figure 8 is a cross sectional view of C-C' of Figure 7;
Figures 9 and 10 are cross sectional views of line D-D' of Figure 7 which shows an operation state of a latch module 90;
Figure 11 is a cross sectional view of line E-E' of a fourth driving force accelerating unit 500 of Figure 3;
Figure 12 is a cross sectional view of line F-F' of a first driving force accelerating unit 200 of Figure 3;
Figure 13 is a cross sectional view of line G-G' of a second driving force accelerating unit of Figure 3; and
Figure 14 is a cross sectional view of line H-H' of a third driving force accelerating unit of Figure 3.

### Best Mode for Carrying Out the Invention

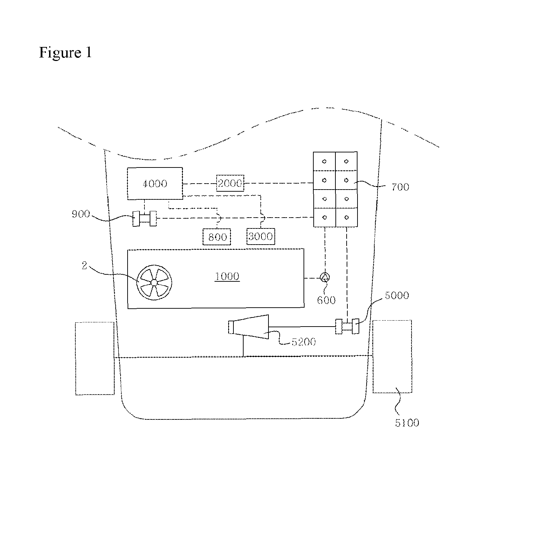

The preferred embodiments of the present invention will be described with reference to Figures 1 through 14.

Figure 1 is a schematic view of a power generation control system of an electric vehicle according to the present invention.

As shown in Figure 1, the power generation control system of an electric vehicle according to the present invention comprises a spring power generation apparatus 1000, an overcharge detection unit 2000, a braking unit 3000, a detection sensor 800, a battery 700 and a spring winding motor 900.

In the electric construction, the spring power generation apparatus 1000 is electrically connected with a vehicle generator 600, and the battery 700 is connected with the spring winding motor 900, the overcharge detection unit 2000, the detection sensor 800 and the braking unit 3000, respectively, which are elastically connected with the control unit 4000 and is also electrically connected with the driving motor 5000.

In the mechanical construction, the driving motor is connected with a transmission 5200, and the transmission 5200 is connected with a driving wheel 5100.

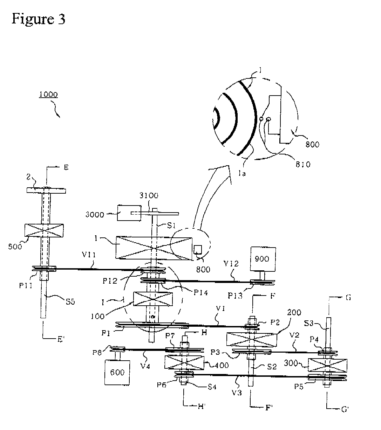

The spring power generation apparatus 1000 will be described in more details with reference to Figures 3 through 14.

Figure 3 is a schematic view of the spring power generation apparatus 1000 of Figure 1, which is a front view when seeing the vehicle from its front side in Figure 1.

As shown in Figure 3, the spring power generation apparatus 1000 according to the present invention comprises a driving force deceleration unit 100 which is axially disposed on a main driving shaft S1 and a plurality of shafts S2, S3, S4, S5 and is organically connected with the same, a plurality of first through fourth driving force accelerating units 200, 300, 400, 400, a spring 1 connected with the main driving shaft S1, with the driving force decelerating unit 100 being connected with the fourth driving force accelerating unit 500, with a manual handle 2 being engaged in the fourth driving force accelerating unit 500.

The driving force decelerating unit 100 is connected with the spring winding motor 900, and the third driving force accelerating unit 400 is connected with the vehicle generator 600, and the vehicle generator 600 is electrically connected with the battery 700, and a detection sensor 800 is positioned closer to the spring 1 for transmitting a certain signal to the control unit 4000 when an over loosing state of the spring 1 is detected.

As shown in Figure 3, the detection sensor 800 has a contact point 810 which is spaced apart from an outer most side of a plate spring which belongs to the spring 1 by a certain distance and is opposite to the outer most side 1 a, and the contact point 810 is pressed and contacted with the help of the outer most side 1 a of the plate spring when the spring 1 is over loosened for thereby transmitting a contact signal to the control unit 4000. In this case, the control unit 4000 supplies electric energy stored in the battery 700 to the spring winding motor 900 for a certain time, so that the spring winding motor 900 can operate for a certain time period.

The main driving shaft S1 is equipped with a braking disk 3100, and the braking unit 3000 is formed of a conventional disk braking unit which presses the braking disk 3100.

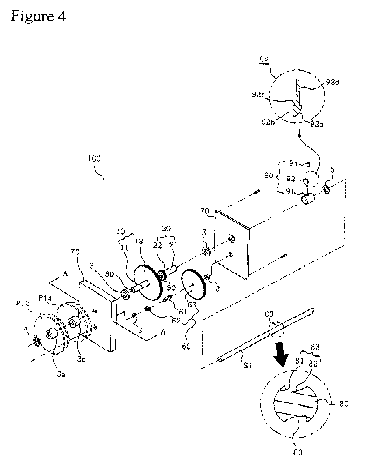

As shown in Figures 4 through 10, the driving decelerating unit 100 which is a key element of the spring power generation apparatus 1000 will be described.

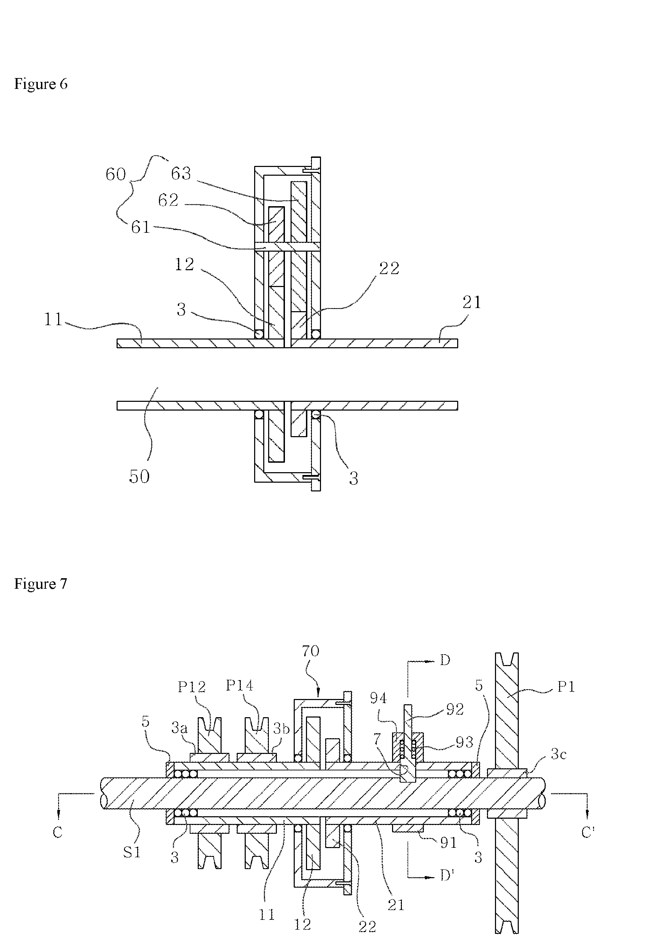

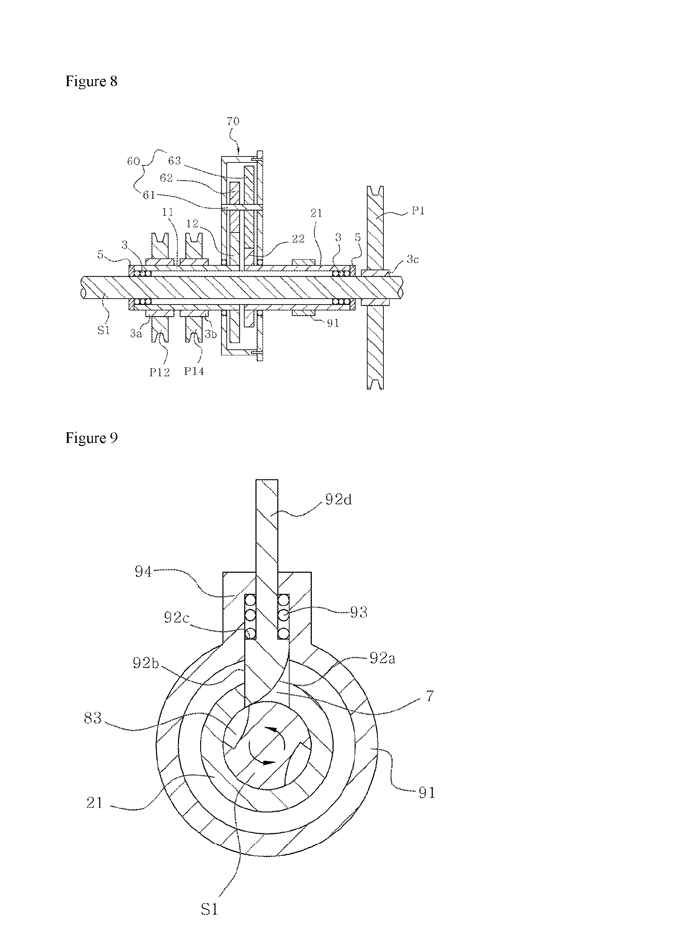

Figure 4 is a disassembled perspective view illustrating a driving force deceleration unit 100 of a major portion I of Figure 3, Figure 5 is a cross sectional view of line A-A' of Figure 3 from which an element of the construction of Figure 4 is omitted, Figure 6 is a cross sectional view of line B-B' of Figure 5, Figure 7 is a cross sectional view of A-A' which shows an engaged state of Figure 4, Figure 8 is a cross sectional view of C-C' of Figure 7, and Figures 9 and 10 are cross sectional views of line D-D' of Figure 7 which shows an operation state of a latch module 90.

As shown in Figures 4 through 10, the driving force decelerating unit 100 comprises first and second driving modules 10, 20, the gear sequence 60 and the support unit 70. The first and second driving modules 10 and 20 are engaged with the centers of the solar gear 12 and the pinion 22 being integrally connected at each end of the first and second driving shafts 11 and 21, and a through hole 50 is formed at each end of the first and second driving shafts 11, 21 while integrally passing through the centers of the solar gear 12 and the pinion 22 as shown in Figures 4 through 6.

The gear sequence 60 is provided as many as the solar gear 12 and the pinion 22 and is engaged with the same, a couple of gears 62, 63 being axially engaged at the support shaft 61 as shown in Figures 6 and 8. The gear 63 having a larger pitch among the gears 62 and 63 is thread engaged with the pinion 22 which is integrally engaged with the second driving shaft 21, so it cooperates with the first driving module 10, and the gear 62 having a smaller pitch is thread engaged with the solar gear 12 which is integrally connected with the first driving shaft 11 as shown in Figures 6 and 8. The gear sequence 60 is configured to cooperate with the first and second driving modules 10 and 20. When a driving force is applied to the first driving shaft 11, the second driving shaft 21 decelerates with its revolution being more reduced as compared to the first driving shaft 11, and when driving force is applied to the second driving shaft 21, the first driving shaft 11 accelerates with its revolution being increased as compared to the second driving shaft 21.

The first through fourth driving force accelerating units 200, 300, 400, 500 have the same elements as the above-described driving force decelerating unit 100, provided that in case of the driving force decelerating unit 100, the driving force is applied to the first driving shaft 11, so that the decelerated driving force is outputted via the second driving force shaft 21. In case of the first through fourth driving force accelerating units 200, 300, 400, 500, the driving force is applied to the second driving shaft 21, so the accelerated driving force is outputted from the first driving shaft 11. In other words, the driving force decelerating unit 100 and the first through fourth driving force accelerating units 200, 300, 400, 500 equipped with the above necessary elements are classified into the driving force decelerating unit 10 which decelerates the driving force and the first through fourth driving force accelerating units 200, 300, 400, 500 which accelerate the driving force depending on where the driving force is inputted from and is outputted to.

The first and second driving shafts 11 and 21 passes through the support unit 70, and the support shaft 61 is rotatably supported as shown in Figures 6 and 8.

The driving force decelerating unit 100 is further provided with a latch module 90 at an outer diameter portion of the second driving force shaft 21 forming teeth 100, and a latch groove 83 is further provided at an outer diameter portion of the main driving force shaft S1 along its outer surface as it is vertically bent from the inwardly bent sliding bent unit 81 and the end of the sliding bent unit 81 in a vertical and outward direction, with an engaging portion 82 being provided in the latch groove 83 as shown in Figure 4.

The latch module 90 is axially provided at an outer diameter portion of the second driving shaft 21 in the side of the driving force decelerating unit 100 and is equipped with a support frame 91 which rotates together with the second driving shaft 21. A latch unit 92 is provided on the upper side of the support frame 91, and a latch casing 93 is provided in its interior for elastically supporting the latch unit 92 in the downward direction. The latch unit 92 has the same shape as the latch groove 83 like its lower side is formed in a protruded shape as shown in Figure 4. As shown in Figure 4, the latch unit 92 includes a slope portion 92a with a slop same or similar with the sliding bent unit 81, and a cut-away surface 92b which goes vertically from an end of the member 92a, and an engaging shoulder 92c is formed on the upper sides of the cut-away surface 92b and the slope portion 92a, and a support rod 92d is extended upwardly from the upper surface of the engaging shoulder 92c. The spring 93 is disposed between the inner upper surface of the latch casing 94 and the engaging shoulder 92c of the latch unit 92, so that the spring 93 elastically operates with a certain level toward the latch groove 83 as shown in Figures 7, 9, 10.

A latch move hole 7 is formed at the second driving shaft 21 of the driving force decelerating unit 100 while passing through the latch unit 92 and the portion corresponding to the latch groove 83, so that the latch unit 92 can be guided into the latch groove 83 through the latch move hole 7 as shown in Figures 5 and 7.

As shown in Figure 9, when the main driving shaft S1 rotates in the counterclockwise direction by the elastic recovery force of the spring 1 (in the leftward direction in Figure 3), the slope portion 92a formed in its lower side slides along the sliding bent unit 81 of the latch groove 83 formed in the main driving shaft S1, so that only the main driving shaft S1 rotates in the counterclockwise direction for thereby generating electric power.

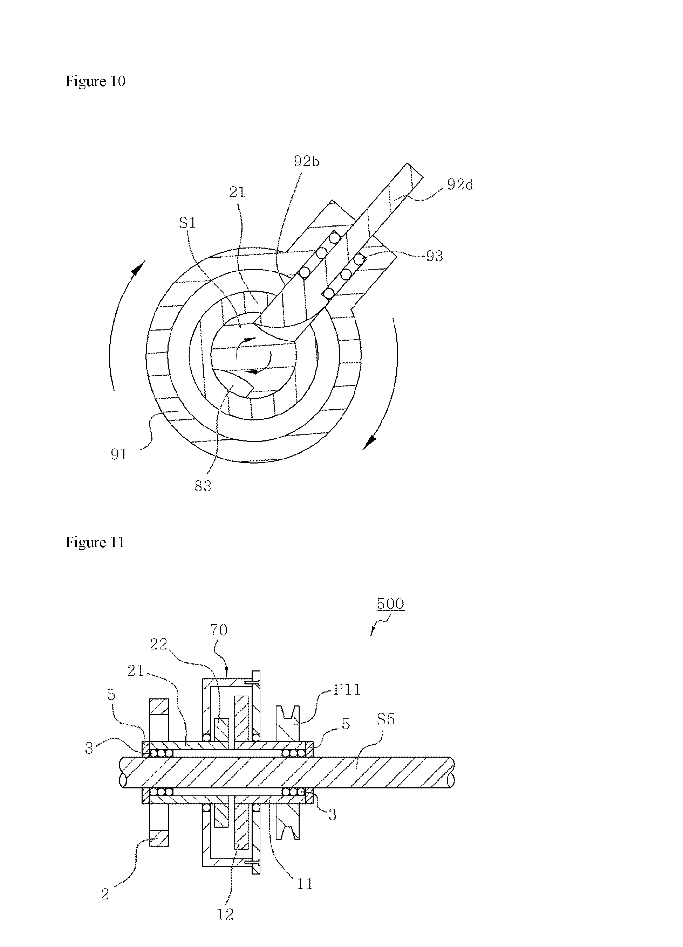

As shown in Figure 10, when the driving force is applied to the first driving shaft 21 of the driving force decelerating unit 100 through the spring winding motor 900 or the manual handle 2, the second driving shaft 21 of the driving force decelerating unit 100 (in the right direction in Figure 3) rotates in the clockwise direction, and the cut-away surface 92b formed in the lower side of the latch unit 92 is engaged by the engaging portion 82 of the latch groove 83 formed in the main driving shaft S1, so that the main driving shaft S1 rotates in the clockwise direction along with the second driving shaft 21 of the driving force decelerating unit 100. So, the spring 1 connected with the main driving shaft S1 has enhancing recovery force as the plate spring (not shown) of the teeth 1 is wound by means of the clockwise direction rotation.

Two one-way bearings 3a and 3b are inserted in the outer diameter portion of the first driving shaft 11 of the driving force decelerating unit 100, which rotate in the direction opposite to the driving direction of the spring winding motor 900 while not rotating in its opposite direction. Two pulleys P12 and P14 are inserted into the one-way bearings 3a and 3b while rotating together.

The pulley P14 is connected with the pulley P13 engaged on the driving shaft of the spring winding motor 900 via a driving force transfer belt V12, and the pulley P12 is connected with the first driving shaft 11 of the fourth driving force accelerating unit 500 via the driving force transfer belt V11.

A pulley P1 is engaged on an outer diameter portion of the main driving shaft S1 for the main driving shaft S1 to transfer a driving force of the counterclockwise direction (in the left direction in Figure 3) to the first driving force accelerating unit 200 by means of the elastic recovery force of the spring 1 as shown in Figure 9. At this time, one-way bearing 3c is inserted into the outer diameter portion of the main driving shaft S1 and rotates in one direction which is opposite to the rotation direction of the main driving shaft S1 between the driving shaft S1 and the pulley P1. The pulley P1 has the same construction as the one-way bearing 3c as it is installed at the outer diameter portion of the one-way bearing 3c as shown in Figures 7 and 8.

The first through fourth driving accelerating units 200, 300, 400, 500 will be described with reference to Figures 11 through 14.

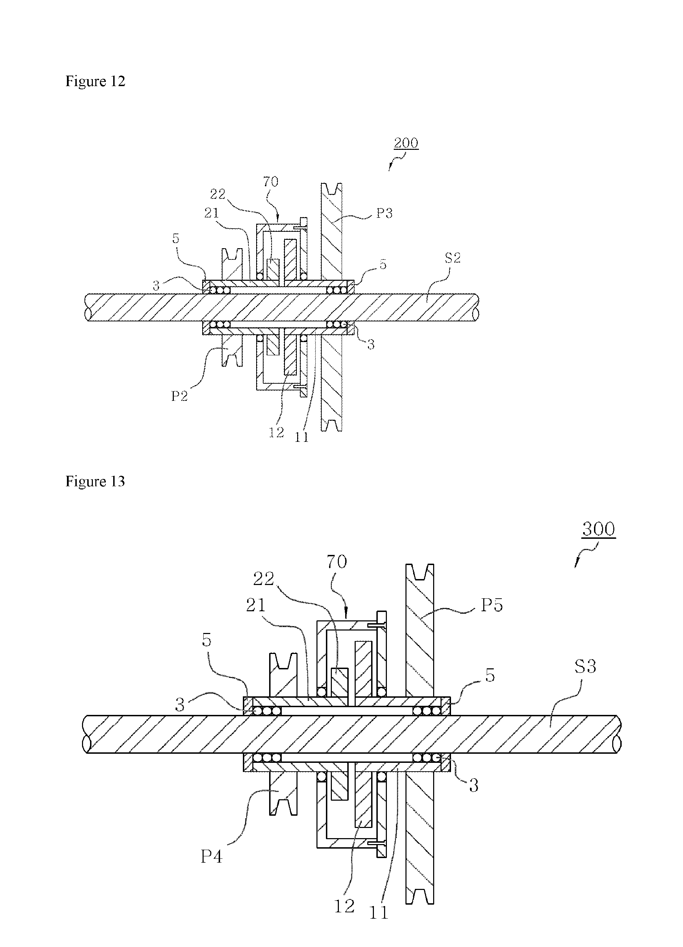

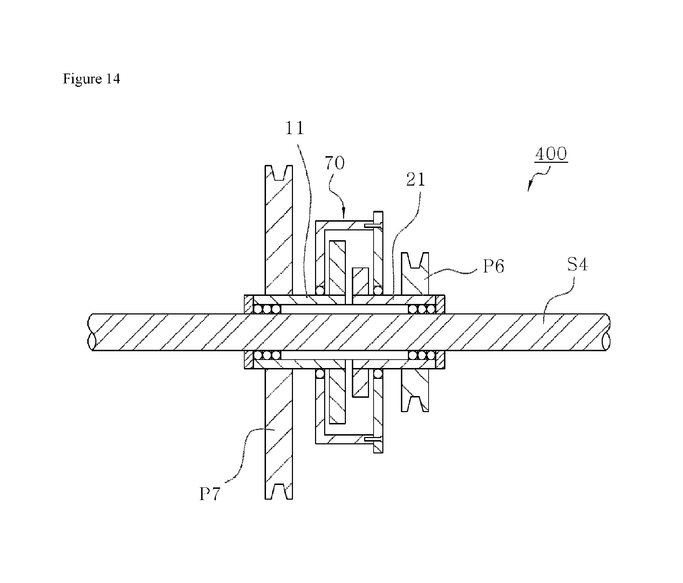

Figure 11 is a cross sectional view of line E-E' of a fourth driving force accelerating unit 500 of Figure 3, Figure 12 is a cross sectional view of line F-F' of a first driving force accelerating unit 200 of Figure 3, Figure 13 is a cross sectional view of line G-G' of a second driving force accelerating unit of Figure 3, Figure 14 is a cross sectional view of line H-H' of a third driving force accelerating unit of Figure 3.

Since the first through fourth driving force accelerating units 200, 300, 400, 500 according to the present invention have the same construction as the first and second driving module 10, 20, the accelerator and decelerator unit 60 and the support unit 70 of the driving force decelerating unit 100, the same descriptions will be omitted.

As shown in Figures 3 and 11, the fourth driving force accelerating unit 500 includes a pulley P11 axially engaged at the outer diameter portion of the first driving shaft 21, and a manual handle 2 which is engaged at the outer diameter portion of the second driving shaft 21. Since the shaft S5 passes through the through hole 50 of the fourth driving force accelerating unit 500, the fourth driving force accelerating unit 500 is supported by means of the shaft S5. Since the bearing 3 is disposed in the interior of the through hole 50, the first and second driving shafts 11 and 21 of the fourth driving force accelerating unit 500 are freely rotated with respect to the shaft S5. In addition, the pulley P11 is connected with the pulley P12 installed in the first driving shaft 11 of the driving force decelerating unit 100 via the driving force transfer belt V11.

As shown in Figures 3 and 12, the pulleys P2 and P3 having different outer radiuses are engaged on the outer diameter portions of the first and second driving shafts 11 and 21 in the first driving force accelerating unit 200. The pulley P2 having smaller radius is axially engaged at the second driving shaft 21 of the first driving force accelerating unit 200, and the pulley P3 having larger radius is installed at the first driving shaft 11 of the first driving force accelerating unit 200. The pulley P2 is connected with the pulley P1 engaged at the main driving shaft S1 via the driving force transfer belt V1, and the pulley P3 is connected with the second driving force accelerating unit 300. The shaft S2 passes through the through hole 50 of the first driving force accelerating unit 200, so that the first driving force accelerating unit 500 is supported by the shaft S2. The bearing 3 is disposed in the through hole 50, so that the first and second driving shafts 11 and 21 can freely rotate with respect to the shaft S2.

As shown in Figures 3 and 13, the pulleys P4 and P5 having different radiuses are engaged at the outer diameter portions of the first and second driving shafts 11 and 21 in the second driving force accelerating unit 300. The pulley P4 having smaller radius is axially engaged at the second driving shaft 21 of the second driving force accelerating unit 300, and the pulley P5 having larger radius is engaged at the first driving shaft 11 of the second driving forece accelerating unit 300. The pulley P4 is connected with the pulley P3 of the first driving force accelerating unit 200, and the pulley P5 having larger radius is connected with the third driving force accelerating unit 400. The shaft S3 passes through the through hole 50 of the second driving force accelerating unit 300, so that the second driving force accelerating unit 300 is supported by the shaft S3. Since a bearing 3 is provided in the through hole 50, the first and second driving shafts 11 and 21 can freely rotates with respect to the shaft S3.

As shown in Figures 3 and 14, the pulleys P6 and P7 having different radiuses are disposed at the outer diameter portions of the first and second driving shafts 11 and 21 in the third driving force accelerating unit 400. The pulley P6 having smaller radius is axially engaged at the second driving shaft 21, and the pulley P7 having larger radius is engaged at the first driving shaft 11. The pulley P6 is connected with the pulley P5 of the second driving force accelerating unit 300 via the driving force transfer belt V3, and the pulley P7 is connected with the pulley P8 engaged at the driving shaft of the vehicle generator 600. The pulley P8 of the vehicle generator 600 is preferably smaller than the pulley P7 of the third driving force accelerating unit 400. Since the shaft S4 passes through the through hole 50 of the third driving force accelerating unit 400, the third driving force accelerating unit 400 can be supported by the shaft S4. Since a bearing 3 is disposed in the through hole 50, the first and second driving shafts 11 and 21 of the third driving force accelerating unit 400 can freely rotate with respect to the shaft S4.

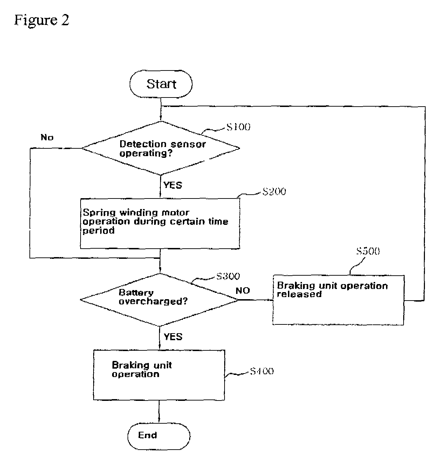

The operations of the power generation control system of an electric vehicle according to the present invention and the spring power generation apparatus 1000 will be described with reference to Figures 1 and 2.

As shown in Figure 3, when a user rotates the manual handle 2 in the rightward direction, the driving force is accelerated by the fourth driving force accelerating unit 500, and the accelerated driving force is applied to the pulley P12 of the first driving shaft 11 of the driving force decelerating unit 100 via the pulley P11 and the driving force transfer belt V11. A bent tensional force from the driving force transfer belt V11 is applied to the one-way bearing 3a connected with the pulley P12. The bent tensional force is applied to the one-way bearing 3a, so that the one-way bearing 3a presses an outer diameter portion of the first driving shaft 11 of the driving force decelerating unit 100, and as shown in Figure 3, the first driving shaft 11 of the driving force decelerating unit 100 rotates in the right direction. As shown in Figure 3, the second driving shaft 21 of the driving force decelerating unit 100 is more decelerated than the first driving shaft 11 of the driving force decelerating unit 100 and rotates in the same direction as the first driving shaft 11 of the driving force decelerating unit 100. As shown in Figure 100, the main driving shaft S1 rotates in the clockwise direction by means of the engaging operation of the latch unit 92 and the latch groove 83, namely, in the right direction in Figure 3. The spring 1 connected with the main driving shaft S1 performs a manual winding work, and the spring 1 has an enhancing elastic recovery force by means of the winding operation.

The one-way bearing 3b connected with the spring winding motor 900 is not applied by a belt tensional force since the spring winding motor 900 is not driven. The one-way bearing 3b connected with the spring winding motor 900 does not press the outer diameter portion of the first driving shaft 11 of the driving force decelerating unit 100, so the elements 3b and 11 rotate ideal, and as shown in Figure 3, the first driving shaft 11 of the driving force decelerating unit 100 rotates in the right direction, and the one-way bearing 3b stops.

One-way bearing 3c inserted into the outer diameter portion of the main driving shaft S1 rolls along with the main driving shaft S1, so as shown in Figure 3, the main driving shaft S1 freely rotates with respect to the one-way bearing 3c, so that the driving force is not transferred to the first driving force accelerating unit 200.

When the manual winding operation of the spring 1 is almost finished, the user does not apply an external force to the manual handle 2, so that the spring power generation apparatus 1000 according to the present invention starts generating power.

As shown in Figure 3, the electric power generation will be described. The main driving shat S1 rotates in the left direction by means of an elastic recovery force of the spring 1, so, as shown in Figure 9, the main driving shaft S1 does not restrict the latch unit 92, and itself freely rotates in the counterclockwise direction (in the left direction in Figure 3). At this time, as shown in Figure 3, the one-way bearing 3c inserted into the main driving shaft S1 does not rotate in the left direction in Figure 3, namely, in the rotation direction of the main driving shaft S1, but rotates in the opposite direction. So the bearing 3c presses the outer portion of the main driving shaft S1 and rotates in the same speed and direction as the main driving shaft S1. The pulley P1 engaged at the outer portion of the bearing 3c rotates in the same direction, and the driving force of the main driving shaft S1 is transferred to the first driving force accelerating unit 200 for thereby driving the teeth 200.

The driving force of the main driving shaft S1 sequentially accelerates the first through third driving force accelerating units 200, 300, 400, and the accelerated driving force is supplied to the vehicle generator 600 via the third driving force accelerating unit 400, so that the vehicle generates 600 generates power. The thusly generated power is stored in the battery 700.

When the power generation starts, as shown in Figure 2, the control unit 4000 controls, and the automatic winding operation of the spring and the operation stop of the spring power generation apparatus 1000 for over charge of the battery can be performed.

Figure 2 is a flow chart of the power generation control system of an electric vehicle according to the present invention.

As shown in Figure 2, the control unit 4000 performs a step S100 for judging whether or not a contact signal is received in the detection sensor 800, so it is possible to judge whether or not the spring 1 is over loosened.

As a result of the judgment with respect to the step S100, when the spring 1 is over loosened, the control unit 40900 supplies electric energy stored in the battery 700 to the spring winding motor 900 for a certain time period, so that the spring winding motor 900 operates for a certain time in the step S200. As a result of the judgment of the step S100, when a result is negative or the step S200 is finished, it is judged whether a s signal from the overcharge detection unit 2000, namely, an overcharge signal of the battery is received or not in a step S300.

As a result of the judgment of the step S300, when a result is positive, the control unit 4000 operates the braking unit 3000. The braking unit 3000 formed of a disk brake presses the braking disk 3100 provided in the main driving shaft S1, so that the main driving shaft S1 no longer rotates in the step S400. As a result of the judgment of the step S300, when a result is negative, the step S500 is performed for releasing the operation of the braking unit 3000, and the routine is fed back to the step S100.

As the power generation operation continues via the spring power generation apparatus 1000, the elastic recovery force of the spring 1 might lose, so that the control unit 4000 controls the automatic winding operation of the spring 1 via and the detection sensor 800 and the spring winding motor. As the above operation continues, when the battery 700 is over charged, the control unit 4000 operates the braking unit 3000 for stopping the operation of the spring power generation apparatus 1000, so that the power generation of an electric vehicle and a charging and discharging system can be efficiently performed.

With the above operation, the power can be generated for the use in the vehicle, and the life span of the battery can be extended, and the mechanical fatigue and abrasion can be significantly reduced.

The automatic winding operation of the spring 1 will be described. When the above operation continues for a certain time, as the spring 1 repeats its winding and unwinding operations, so the outer most portion 1 a of the plate spring presses the contact point of the detection sensor 800, and the contact point 810 is contacted as shown in Figure 3. When the contact point 810 of the detection sensor 800 is contacted, the detection sensor 800 transmits a contact signal to the control unit 4000. In this case, the control unit 4000 supplies the electric power stored in the battery 700 to the spring winding motor 900 for a certain time period, so that the spring winding motor 900 can operate for a certain time. Here as shown in Figure 3, since the spring winding motor 900 rotates in the right direction as shown in Figure 3, the driving force is applied to the pulley P13 of the driving shaft of the spring winding motor 900 and the pulley P14 of the first driving shaft 1 of the driving force decelerating unit 100 via the driving force transfer belt V12. Therefore, a belt tensional force is applied to the one-way bearing 3b connected with the pulley P14 by means of an orbit move of the driving force transfer bent V12, and the one-way bearing 3b presses the outer surface of the first driving shaft 11 of the driving force decelerating unit 100, and as shown in Figure 3, the first driving shaft 11 of the driving force decelerating unit 100 rotates in the right direction. The second driving shaft 21 of the driving force decelerating unit 100 is more decelerated than the first driving shaft 11 of the driving force decelerating unit 100 and rotates in the right direction same as the first driving shaft 11 of the driving force decelerating unit 100. At this time, as shown in Figure 10, the main driving shaft S1 rotates in the clockwise direction, namely, in the right direction in Figure 3 by means of an engaging state of the latch unit 92 and the latch groove 83. The spring 1 connected with the main driving shaft S1 performs an automatic winding operation, and the spring 1 of the automatic winding operation recovers the elastic recovery force. When in the automatic winding operation, the power generation operation of the spring power generation apparatus 1000 stops.

The one-way bearing 3a connected with the fourth driving force accelerating unit 500 and the one-way bearing 3c inserted into the main driving shaft S1 rotate ideal on the first driving shaft 11 of the driving decelerating unit 100 and the main driving shaft S1. As shown in Figure 3, the first driving shaft 11 of the driving force decelerating unit 100 rotates in the right direction, but the one-way bearing 3a remains stopped. The main driving shaft S1 rotates in the right direction, but the one-way bearing 3c inserted into the outer diameter of the element S1 rolls with the main driving shaft S1, so that the rotational force like the main driving shaft S1 is not transferred to the first driving force accelerating unit 200.

As the present invention may be embodied in several forms without departing from the spirit or essential characteristics thereof, it should also be understood that the above-described examples are not limited by any of the details of the foregoing description, unless otherwise specified, but rather should be construed broadly within its spirit and scope as defined in the appended claims, and therefore all changes and modifications that fall within the meets and bounds of the claims, or equivalences of such meets and bounds are therefore intended to be embraced by the appended claims.

## Claims

1. A power generation control system of an electric vehicle, comprising:
a spring power generation apparatus 1000 which converts an elastic recovery force of a spring 1 into a rotational energy, and the revolution of the rotational energy is accelerated, and the accelerated rotational energy is applied to a vehicle generator 600 for thereby generating electric power via the vehicle generator 600;
a battery 700 which stores an electric energy generated by the vehicle generator 600;
an overcharge detection unit 2000 which detects an overcharge of the battery 700;
a detection sensor 800 which detects an over leasing state of the spring 1;
a spring winding motor 900 which provides a driving force to a main driving shaft S1 cooperating with the spring 1;
a braking unit 30000 which restricts the main driving shaft S1; and
a control unit 4000 which provides an power to the spring winding motor 900 for a certain time period when the detection sensor 800 detects an over loosened state of the spring 1 and finishes a winding operation of the spring 1, and when the overcharge detection unit 2000 detects an overcharge state of the battery 700, the winding operation of the spring starts or is finished, and the braking unit 3000 starts operation, so that the power generation operation of the spring power generation apparatus 1000 stops, and when the battery 700 is released from the overcharge state via the overcharge detection unit 2000, the control unit controls the braking unit 3000 to be released from the operation.

2. The system of claim 1, wherein said spring power generation apparatus 1000 includes:
a first driving force accelerating unit 200 which is disposed between the main driving shaft S1 and the vehicle generator 600 and receives a driving force from the main driving shaft S1 and accelerates the inputted driving force and outputs the same;
a second driving force accelerating unit 300 which receives a driving force from the first driving force accelerating unit 200 and accelerates the inputted driving force and outputs the same; and
a third driving force accelerating unit 400 which receives a driving force from the second driving force accelerating unit 300 and accelerates the inputted driving force and outputs the same to the vehicle generator 600 for thereby operating the vehicle generator 600.

3. The system of claim 3, further comprising a driving force decelerating unit 100 which is disposed between the main driving shaft S1 and the spring winding motor 900 and receives a driving force from the spring winding motor 900 and decelerates the inputted driving force and outputs to the main driving shaft S1, so that the main driving shaft S1 rotates in the opposite direction.

4. The system of claim 1, further comprising a manual handle 2 which is connected with the main driving shaft S1 so that an external force is applied to the main driving shaft S1, and when the external force is applied, the main driving shaft S1 rotates in the opposite direction.

5. The system of claim 4, further comprising a fourth driving force accelerating unit 500 which is disposed between the main driving shaft S1 and the manual handle 2 for accelerating an external force inputted from the manual handle 2 and outputting to the main driving shaft S1.

6. The system of claim 3, wherein said driving force decelerating unit 100 comprises:
first and second driving modules 10 and 20 in which the centers of a solar gear 12 and a pinion 22 are integrally connected at an end of each of the first and second driving shafts 11 and 21, and which have a through hole 50 which passes through the centers of the solar gear 12 and the pinion 22 at the ends of the first and second driving shafts 11 and 21;
a accelerator and decelerator unit 60 which has the same number of teeth as the solar gear 12 and the pinion 22 and is thread engaged with the solar gears and pinion 22, with its center being axially engaged at the support shaft 61; and
a support body 70 through which the first and second driving shafts 11 and 21 rotatably pass through and by which the support shaft 61 is rotatably supported.

7. The system of claim 6, further comprising a latch groove 83 which has a sliding bent portion 81 obliquely inwardly bent from an outer diameter portion in the main driving shaft S1 along its outer surface and an engaging portion 82 which is vertically and outwardly bent from an end of the sliding bent portion 81; and the driving force decelerating unit 100 is axially disposed at an outer diameter portion of the second driving shaft 21 of the driving force decelerating unit 100 and includes a support frame 91 which rotates together with the second driving shaft 21 of the driving force decelerating unit 100, and a latch casing 94 includes a latch unit 92 on the upper side of the support frame 91 and a spring 93 for elastically and downwardly supporting the latch unit 92; and the latch unit 92 further includes a latch module 90 having the same or similar shape with the latch groove 83 as being formed in a protruded shape, and a latch move hole 7 is formed at the second driving shaft 21 of the driving force decelerating unit 100, with the portions, which correspond to the latch unit 92 and the latch groove 83, passing through the latch move hole 7.

8. The system of claim 6, wherein one-way bearing 3b is inserted into the outer diameter portion of the first driving shaft 11 of the driving force decelerating unit 100 and rotates in one direction of the main driving shaft S1, not rotating in the opposite direction, and a pulley P14 is engaged to an outer diameter portion of the one-way bearing 3b and rotates in the same manner as the one-way bearing 3b, and the pulley P14 is connected with the pulley P13 engaged at the driving shaft of the spring winding motor 900.

9. The system of claim 2, wherein each of the first driving force accelerating unit 200, the second driving force accelerating unit 300 and the third accelerating unit 400 includes first and second driving modules 10 and 20 in which the centers of the solar gear 12 and the pinion 22 are integrally connected with each end of the first and second driving shafts 11 and 21, and a through hole 50 which passes through the centers of the solar gear 12 and the pinion 22 at each end of the first and second driving shafts 11 and 21; a accelerator and decelerator unit 60 which has the same number of teeth as the solar gear 12 and the pinion 22 and are thread engaged with the same, with its center axially engaged at the support shaft 61; and a support unit 70 through which the first and second driving shafts 11 and 21 rotatably pass through for thereby rotatably supporting the support shaft 61, and the shafts S2, S3, S4 pass through the through hole 50; and the pulley P2 engaged to an outer diameter side of the second driving shaft 21 of the first driving force accelerating unit 200 is connected with the pulley P1 engaged at the main driving shaft S1 via the driving force transfer belt V1, and the pulley P3 engaged to an outer diameter side of the first driving shaft 11 of the first driving force accelerating unit 200 is connected with the pulley P4 engaged at the second driving shaft 21 of the second driving force accelerating unit 300 via the driving force transfer belt V2, and the pulley P6 engaged to an outer diameter portion of the second driving shaft 21 of the third driving force accelerating unit 400 is connected with a pulley P5 engaged to an outer diameter side of the first driving shaft 11 of the second driving force accelerating unit 300 via the driving force transfer belt V3, and the pulley P7 engaged to an outer diameter side of the first driving shaft 11 of the third driving force accelerating unit 400 is connected with the pulley P8 engaged to the driving shaft of the vehicle generator 600 via the driving force transfer belt V4, respectively, in an inter driving structure.

10. The system of claim 9, wherein one-way bearing 3c is inserted into an outer diameter portion of the main driving shaft S1 between the main driving shaft S1 and the pulley P1 and rotates in one direction of the main driving shaft S1, not rotating in the opposite direction, and the pulley P1 is engaged to an outer diameter portion of the main driving shaft S1, so it is configured in the same rotation construction as the one-way bearing 3c.

11. The system of claim 1, wherein a contact point of said detection sensor 800 is formed opposite to the outer most side surface 1a of the plate spring belonging to the spring 1 at a certain distance, and the contact point 810 is pressed by means of the plate spring when the spring 1 is over loosened for thereby performing a contact point operation.

12. The system of claim 1, wherein said driving shaft S1 is equipped with the braking disk 3100, and the braking unit 3000 is a disk braking unit for pressing the braking disk 3100.
